# EUROPÄISCHE PATENTSCHRIFT

(11) **EP 1 065 105 B1**
(45) Veröffentlichungstag und Bekanntmachung des Hinweises auf die Patenterteilung: **02.02.2005**
(21) Anmeldenummer: 00112196.1
(22) Anmeldetag: 07.06.2000
(51) Int. Cl.: B60R 16/02, H04B 5/00, H04L 25/02, G08C 17/06

(54) **Schaltungsanordnung zur Signalkopplung zwischen Schaltungsteilen mit voneinander getrennten Versorgungsleitungen**
Circuit for coupling signals between circuit parts having separated power lines
Circuit pour coupler des signaux entre des portions de cicuit avec lignes d'alimentation séparées

(30) Priorität: 01.07.1999 DE 19930358
(43) Veröffentlichungstag der Anmeldung: 03.01.2001
(73) Patentinhaber: SIEMENS AKTIENGESELLSCHAFT, 80333 München (DE)
(72) Erfinder: Klostermeier, Dieter, Dipl.-Ing. (FH), 78050 Villingen-Schwenningen (DE)

(56) Entgegenhaltungen:
- DE-A- 19 610 248
- US-A- 4 638 287
- US-A- 4 697 092
- US-A- 5 870 046

## Beschreibung

Die Erfindung betrifft eine Schaltungsanordnung zur Signalkopplung zwischen Schaltungsteilen mit voneinander getrennten Versorgungsleitungen, insbesondere zur Anwendung in Fahrzeugen, in denen ein mit anderen Fahrzeugeinrichtungen kommunizierendes Datenerfassungsgerät angeordnet ist, wobei das Datenerfassungsgerät und die mit ihm Signale austauschenden Fahrzeugeinrichtungen mit voneinander galvanisch getrennten Versorgungsleitungen verbunden sind. Damit bezieht sich die Erfindung insbesondere auf eine in einem Datenerfassungsgerät angeordnete Schaltungsanordnung zur Signalkopplung zwischen zündungsgebundenen und nicht zündungsgebundenen Geräten und Einrichtungen in einem Fahrzeug.

Eine Schaltungsanordnung gemäß dem Oberbegriff von Anspruch 1 ist aus DE 19610248 A1 bekannt.

Datenerfassungsgeräte, wie z. B. ein Tachograf, sind in einem Fahrzeug mit anderen Fahrzeugeinrichtungen, wie einem Geschwindigkeitssensor, einem Geschwindigkeitsbegrenzer, einem Kombiinstrument oder ähnlichen Geräten und Einrichtungen zum Zweck des Daten- und Signalaustausches verbunden, wobei diese Geräte und Einrichtungen zum Erhalt ihrer Betriebsspannung an unterschiedlichen Versorgungsleitungen angeschlossen sein können. So steht in einem Fahrzeug Dauerplus zur Verfügung, womit eine direkte oder über Sicherungen bzw. Strom begrenzende Elemente geführte elektrische Energieversorgung aus der Fahrzeugbatterie gemeint ist. Darüber hinaus gibt es von Dauerplus galvanisch getrennte Versorgungsleitungen, die mit der Zündung des Fahrzeugs und/oder einem Hauptschalter schaltbar sind.

Ein in einem Fahrzeug angeordneter Tachograf besitzt aufgrund seiner Zweckbestimmung, permanent Fahreraktivitäten sowie Fahrzeugbewegungen aufzuzeichnen, an Dauerplus angeschlossene Schaltungsteile. Er kommuniziert jedoch auch mit Einrichtungen im Fahrzeug, deren Betriebsspannung erst durch eine Betätigung der Zündung und/oder des Hauptschalters zugeschaltet wird, wobei diese zugeschaltete Betriebsspannung auch zur Energieversorgung derjenigen Schaltungsteile verwendet wird, die zwar im Tachografen angeordnet sind, die aber mit denjenigen Einrichtungen im Fahrzeug verbunden sind, von denen der Tachograf die aufzuzeichnenden Signale erhält. Daher sind im Tachografen an unterschiedliche Versorgungsleitungen angeschlossene Schaltungsteile vorhanden, zwischen denen wiederum im Tachografen Signale unterschiedlicher Beschaffenheit ausgetauscht werden müssen. Bei diesen Signalen kann es sich um statische bzw. niederfrequente Signale, aber auch um dynamische Signale mit Frequenzen bis in den MHz-Bereich hinein handeln. Darüber hinaus werden zwischen einem Tachografen und den übrigen Einrichtungen im Fahrzeug auch zunehmend digitale Signale und Daten über einen Datenbus, wie z. B. einem CAN-Bus, ausgetauscht.

Dadurch, daß im Datenerfassungsgerät, für das hier beispielhaft ein Tachograf gewählt wurde, miteinander kommunizierende Schaltungsteile vorhanden sind, die an unterschiedliche Versorgungsleitungen angeschlossen sind, ergeben sich diverse Probleme. So können Störungen bei der Signalübertragung aufgrund unterschiedlicher Massepotentiale infolge von Spannungsabfällen entlang des im Fahrzeug angeordneten Kabelbaums auftreten. Auch dürfen weder nennenswerte Ströme vom Datenerfassungsgerät zu den mit ihm verbundenen Einrichtungen im Fahrzeug fließen noch sollte ein solcher Strom von diesen externen Einrichtungen in das Datenerfassungsgerät hineinfließen, was aber geschehen könnte, wenn bei den schaltbaren Versorgungsleitungen die ihnen zugeordnete Minusleitung, d.h. die Leitung für das Massepotential, auf das sich die an der jeweiligen Versorgungsleitung anliegende Spannung bezieht, abgeschaltet wird.

Zur Vermeidung dieser unerwünschten Effekte könnte man beispielsweise Optokoppler oder hochohmige Serienwiderstände in die Signalpfade einfügen. Diese Maßnahmen haben jedoch den Nachteil, daß Optokoppler, die sich für eine schnelle Signalübertragung eignen, relativ teuer sind und daß bei der Verwendung hochohmiger Serienwiderstände sichergestellt sein müßte, daß die Massepotentiale der im Datenerfassungsgerät vorhandenen Betriebsspannungen nur so wenig voneinander abweichen, daß die internen Schaltschwellen der in den jeweiligen Schaltungsteilen angeordneten Signalempfänger nicht überschritten werden. Die Einhaltung einer solchen Bedingung kann jedoch unter den üblichen Betriebsbedingungen für ein Fahrzeug nicht in jedem Fall garantiert werden.

Es ist nun die Aufgabe der vorliegenden Erfindung, eine Schaltungsanordnung zur Signalkopplung zwischen Schaltungsteilen mit voneinander getrennten Versorgungsleitungen aufzuzeigen, die unter den genannten Betriebsbedingungen eine zuverlässige, störungsfreie und kostengünstige Übertragung von statischen und dynamischen Signalen sicherstellt.

Die Aufgabe wird durch die Merkmale des ersten Anspruchs gelöst. Die abhängigen Ansprüche zeigen vorteilhafte Weiterbildungen und Ausgestaltungen der gefundenen Lösung.

Die gefundene Lösung zeichnet sich dadurch aus, daß in Verbindung mit einer kapazitiven Kopplung von galvanisch getrennten Schaltungsteilen eine Zwangstaktung der zu übertragenden Signale vorgenommen wird, wodurch auch statische und niederfrequente Nutzsignale über die mit Koppelkondensatoren versehenen Signalpfade übertragen werden können. Des weiteren enthält die vorgeschlagene Lösung Maßnahmen, um in der Schaltungsanordnung den Eingangsspannungsbereich der ein Signal empfangenen Einrichtungen im Verhältnis zu dem Ausgangsspannungsbereich der ein Signal sendenden Einrichtungen zu stabilisieren, um trotz des in Fahrzeugen herrschenden rauhen Milieus eine zuverlässige, störungsfreie und kostengünstige Übertragung von statischen und dynamischen Signalen zu ermöglichen.

In Verbindung mit der einen anliegenden Figur, die den prinzipiellen Aufbau der vorgeschlagenen Schaltungsanordnung zeigt, soll die gefundene Lösung anhand eines Ausführungsbeispiels nun näher erläutert werden.

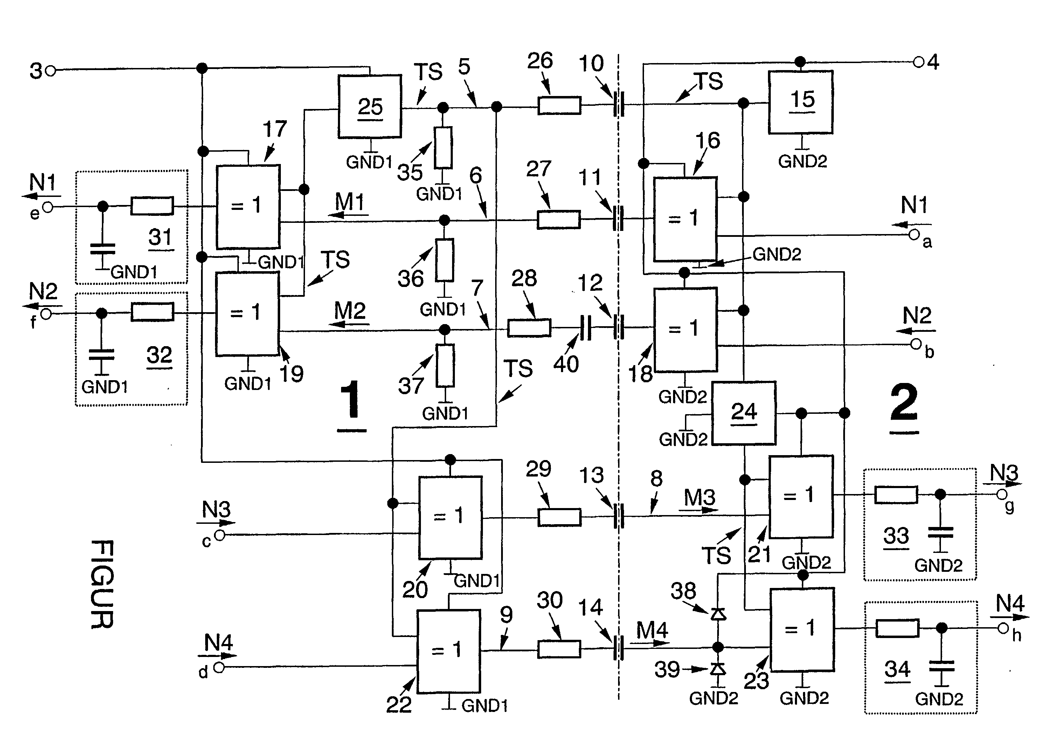

Die vorgeschlagene Schaltungsanordnung zur Signalkopplung zwischen Schaltungsteilen mit voneinander getrennten Versorgungsleitungen besteht aus einem ersten Schaltungsteil 1 und mindestens einem weiteren Schaltungsteil 2, wobei der erste Schaltungsteil 1 an einer ersten Versorgungsleitung 3 mit einem ersten Massepotential GND1 angeschlossen ist und der oder die anderen Schaltungsteile 2 an eine von der ersten Versorgungsleitung 3 verschiedene Versorgungsleitung 4 mit einem zweiten Massepotential GND2 angeschlossen sind, wobei mindestens in einem dieser weiteren Schaltungsteile 2 die Versorgungsleitung 4 oder die zugehörige Leitung für das Massepotential GND2 zugeschaltet und abgeschaltet werden kann. So könnte in dem dargestellten Beispiel der erste Schaltungsteil 1 an der Dauerplus-Klemme der Batterie eines Fahrzeugs angeschlossen sein, wohingegen der andere Schaltungsteil 2 von einer Versorgungsleitung 4 stromversorgt wird, die durch eine Betätigung der Zündung des Fahrzeugs und/oder eines Hauptschalters für die Energieversorgung geschaltet und gegebenenfalls für ihre Stabilisierung über einen Längsregler geführt wird. Durch eine strichpunktierte Linie wird in der Figur die galvanische Trennung der beiden Schaltungsteile 1 und 2 angezeigt. Die in den Schaltungsteilen 1 und 2 dargestellten Massepotentiale sind in der Regel voneinander verschiedenen und daher mit GND1 für den ersten, z. B. von Dauerplus versorgten Schaltungsteil 1 und mit GND2 für den anderen Schaltungsteil 2 bezeichnet. Damit sind alle Spannungen, die an einem elektronischen Bauteil anliegen, das im Schaltungsteil 1 angeordnet ist, auf das Massepotential GND1 bezogen, wohingegen für alle im Schaltungsteil 2 angeordneten elektronischen Bauteile entsprechendes mit Bezug auf das Massepotential GND2 gilt.

Zwischen dem ersten Schaltungsteil 1 und dem oder den anderen Schaltungsteilen 2 bestehen ein oder mehrere Signalpfade 6, 7, 8, 9. In dem vorliegenden Beispiel wurden jeweils zwei Signalpfade 6 und 7 bzw. 8 und 9 für jede Übertragungsrichtung zwischen den Schaltungsteilen 1 und 2 gewählt sowie zusätzlich ein Pfad 5 zur Übertragung eines Taktsignals TS, auf das nachfolgend noch eingegangen wird. In jedem der Signalpfade 6, 7, 8, 9 sowie in dem Pfad 5 zur Übertragung eines Taktsignals TS ist ein Koppelkondensator 10, 11, 12, 13, 14 vorgesehen, um Signale zwischen dem ersten und dem oder den anderen Schaltungsteilen kapazitiv zu übertragen. Es empfiehlt sich, die Kapazität der Koppelkondensatoren 10, 11, 12, 13, 14 relativ klein und deren Sperrspannung angemessen hoch zu wählen.

In dem in der Figur dargestellten Beispiel ist im Schaltungsteil 2, dessen Versorgungsleitung zuschaltbar sein soll, also z. B. zündungsabhängig ist, ein Taktgenerator 15 vorgesehen, der sein Taktsignal TS auch dem ersten Schaltungsteil 1 zur Verfügung stellt. Dieser Taktgenerator 15 kann ein beliebiges digitales Wechselsignal erzeugen. Falls ein kontinuierliches Rechtecksignal gewählt wird, ist darauf zu achten, daß sich das Taktsignal TS von allen zwischen den Schaltungsteilen 1 und 2 zu übertragenden Nutzsignalen N1, N2, N3, N4 zumindest in der Phasenlage, der Frequenz oder der Pulsweite unterscheidet. Wesentlich ist dabei, daß das Taktsignal TS mit den zu übertragenden Nutzsignalen N1, N2, N3, N4 nicht identisch ist. Prinzipiell könnte der Taktgenerator 15 auch in dem dauerhaft bestromten Schaltungsteil 1 angeordnet sein oder es könnten in beiden Schaltungsteilen 1 und 2 je ein Taktgenerator vorgesehen sein. In diesem letzteren Fall müßten die dann unabhängigen Taktsignale auch über getrennte Pfade von einem zum anderen Schaltungsteil übertragen werden.

In jedem Schaltungsteil 1 und 2 sind zum Senden und zum Empfangen von zu übertragenden Nutzsignalen N1, N2, N3, N4 in den Signalpfaden 6, 7, 8, 9 beidseitig der Koppelkondensatoren 11, 12, 13, 14 Logikeinheiten 16, 17, 18, 19, 20, 21, 22, 23 vorgesehen, die sowohl senderseitig als auch empfängerseitig ein zu übertragendes Nutzsignal N1, N2, N3, N4 mit dem Taktsignal TS jeweils über eine "EXKLUSIV ODER" - Funktion verknüpfen. Dadurch können über die Signalpfade 6, 7, 8, 9 auch statische und niederfrequente Nutzsignale N1, N2, N3, N4 übertragen werden, die sich in ihrem Zeitverhalten dadurch auszeichnen, daß sie senderseitig so lange auf einem bestimmten Signalpegel verharren, daß in dieser Zeit auf der Empfängerseite der Signalpfade 6, 7, 8, 9 durch das Zeitverhalten der Koppelkondensatoren 11, 12, 13, 14 und die damit in Verbindung stehenden durch die Koppelkondensatoren 11, 12, 13, 14 fließenden Ströme die Spannungspegel wegdriften würden, was erfindungsgemäß aber durch die Zwangstaktung verhindert wird, welche durch die Verknüpfung der Nutzsignale N1, N2, N3, N4 mit dem Taktsignal TS über die "EXKLUSIV ODER" - Funktion bewirkt wird.

Das Nutzsignal N1, N2, N3 oder N4, das über den im Signalpfad 6, 7, 8 oder 9 angeordneten Koppelkondensator 11, 12, 13 oder 14 übertragen werden soll, wird an den Klemmen a, b, c oder d in die Schaltungsanordnung eingespeist und kann an den Klemmen e, f, g oder h wieder abgenommen werden. Durch die erfindungsgemäße Verknüpfung des Nutzsignals N1, N2, N3, N4 mit dem Taktsignal TS wird aus dem eingespeisten Nutzsignal N1, N2, N3, N4 ein Mischsignal M1, M2, M3, M4. Die senderseitigen Logikeinheiten 16, 18, 20, 22 kodieren damit das zu übertragende Nutzsignal N1, N2, N3, N4 und die empfängerseitigen Logikeinheiten 17, 19, 21, 23 dekodieren es wieder. Die in der Figur unter den Bezugszeichen N1, N2, N3, N4 und M1, M2, M3, M4 angebrachten horizontalen Pfeile geben die Übertragungsrichtung der Signale an, woraus dann in der Folge auch leicht ersichtlich ist, welche der dargestellten Logikeinheiten 16, 17, 18, 19, 20, 21, 22, 23 die Funktion eines Senders und welche die Funktion eines Empfängers haben.

Der Taktgenerator 15 und die empfängerseitigen Logikeinheiten 17, 19, 21, 23 sind vorzugsweise in beiden Schaltungsteilen 1 und 2 über eine Anpassungseinrichtung 24 bzw. 25 miteinander verbunden, um das den empfängerseitigen Logikeinheiten 17, 19, 21, 23 zugeführte Taktsignal TS in dem Maße zeitlich anzupassen, wie die über die Signalpfade 6, 7, 8, 9 übertragenen Mischsignale M1, M2, M3, M4 in den senderseitigen Logikeinheiten 16, 18, 20, 22 in ihrer Laufzeit verzögert werden.

Zur Begrenzung des in den Signalpfaden 6, 7, 8, 9 sowie des in dem Pfad 5 für das Taktsignal TS fließenden Stromes ist es vorteilhaft, jeweils in Serie zu den Koppelkondensatoren 10, 11, 12, 13, 14 einen Widerstand 26, 27, 28, 29, 30 anzuordnen. Ein solch unerwünschter Stromfluß ergibt sich beispielsweise dann, wenn im Schaltungsteil 2 die Versorgungsleitung 4 oder die Leitung für das zugehörige Massepotential GND2 ein- oder ausgeschaltet wird. Um auch im Fehlerfall bei einem Kurzschluß eines der Koppelkondensatoren 10, 11, 12, 13 oder 14 einen galvanisch gekoppelten Stromfluß zu vermeiden, können zu diesem Zweck den Koppelkondensatoren 10, 11, 12, 13, 14 jeweils in Serie ein weiterer Kondensator hinzugefügt werden, wie es in der Figur beispielhaft im Signalpfad 7 durch den Kondensator 40 dargestellt ist.

Für den Aufbau der vorgeschlagenen Schaltungsanordnung hat es sich bewährt, die Logikeinheiten 16, 17, 18, 19, 20, 21, 22, 23 durch HCMOS-Gatter zu realisieren, weil diese unter den üblicherweise in einem Fahrzeug gegebenen Betriebsbedingungen die über die Signalpfade 6, 7, 8, 9 übertragenen Mischsignale M1, M2, M3, M4 zuverlässig zu interpretieren vermögen. Derartige Gatter verfügen über hochohmige Signaleingänge und eine für den angesprochenen Anwendungsfall geeignete Eingangsbeschaltung.

Um Fehlfunktionen an den im ersten Schaltungsteil 1 angeordneten und damit dauerhaft stromversorgten Logikeinheiten 17 und 19 sowie an der Anpassungseinrichtung 25 zu vermeiden, empfiehlt es sich, bei den in diesem Schaltungsteil 1 liegenden empfängerseitigen Logikeinheiten 17 und 19 und der gegebenenfalls dort auch vorgesehenen Anpassungseinrichtung 25 jeweils einen Widerstand 35, 36, 37 vorzusehen, der den mit dem Koppelkondensator 10, 11, 12 verbundenen Eingang der Logikeinheit 17 und 19 bzw. der Anpassungseinrichtung 25 - wie in der Figur dargestellt - gegenüber dem Massepotential GND1 fixiert. Alternativ könnte man den Eingang der Logikeinheit 17 und 19 bzw. der Anpassungseinrichtung 25 jedoch auch gegenüber der Versorgungsspannung in diesem Schaltungsteil 1 fixieren. Die an den Eingängen der genannten Logikeinheiten 17 und 19 sowie der Anpassungseinrichtung 25 anliegenden Spannungspegel sollten sich nicht im analogen Zwischenbereich der HCMOS-Gatter aufhalten, falls zur Ausführung der hier vorgeschlagenen Schaltungsanordnung derartige Logikeinheiten verwendet werden, weil sonst an HCMOS-Gattern unerwünschte Effekte wie Oszillationen an deren Ausgang und ein erhöhter Stromverbrauch auftreten können. Statt einer Fixierung der Spannungspegel am Eingang der HCMOS-Gatter durch Widerstände 35, 36, 37 können den Eingängen der HCMOS-Gatter auch Schmitt-Trigger vorgeschaltet werden.

Um eine korrekte Signalübertragung zwischen den Schaltungsteilen 1 und 2 zu ermöglichen, muß sichergestellt sein, daß die Potentiale der über einen Koppelkondensator 11, 12, 13, 14 übertragenen Mischsignale M1, M2, M3, M4 oder das Potential des über den Koppelkondensator 10 übertragenen Taktsignals TS den Eingangsspannungsbereich, in welchem die empfängerseitigen Logikeinheiten 17, 19, 21, 23 oder die Anpassungseinrichtung 25 ein Signal auswerten können, nicht überschreiten oder unterschreiten. Wenn das Potential eines übertragenen Signals den oberen Grenzwert des Eingangsspannungsbereiches zu überschreiten droht, wird der ansonsten hochohmige Eingang der Logikeinheit 17, 19, 21, 23 oder derjenige von der Anpassungseinrichtung 25 leitend, so daß ein Strom in diesen Eingang hineinfließt. Wenn das Potential eines übertragenen Signals den unteren Grenzwert des Eingangsspannungsbereiches zu unterschreiten droht, wird der ansonsten hochohmige Eingang der Logikeinheit 17, 19, 21, 23 oder derjenige von der Anpassungseinrichtung 25 leitend, so daß ein Strom aus diesem Eingang herausfließt. Die Realisierung dieser Funktion kann beispielsweise durch ein dem Eingang der Logikeinheit oder der Anpassungseinrichtung 25 vorgeschaltetes oder ein in der Logikeinheit bzw. in der Anpassungseinrichtung 25 integriertes Diodennetzwerk erfolgen. In dem in der Figur im Signalpfad 9 dargestellten Beispiel sorgt das aus den beiden Dioden 38 und 39 bestehende Diodennetzwerk für einen definierten Abstand der Grenzwerte des Eingangsspannungsbereiches vom Massepotential GND2 bzw. von dem Potential der Versorgungsleitung 4. Es versteht sich, daß der Ausgangsspannungshub der senderseitigen Logikeinheiten 16, 18, 20, 22 und der des Taktgenerators 15 auf den Eingangsspannungsbereich der empfängerseitigen Logikeinheiten 17, 19, 21, 23 und den der Anpassungseinrichtung 25 abgestimmt ist. Im eingeschwungenen Zustand liegt an den Koppelkondensatoren 10, 11, 12, 13, 14 die Potentialdifferenz zwischen den beteiligten Massepotentialen GND1 und GND2 an.

Das Taktsignal TS wird in der Regel als Rechtecksignal ausgebildet. Dabei wird die Frequenz des Taktsignals TS so hoch gewählt, daß die Taktlänge des Taktsignals TS bedeutend kürzer ist als diejenigen Zeitkonstanten, welche sich für diejenigen Ströme ergeben, die an den Signaleingängen der empfängerseitigen Logikeinheiten 17, 19, 21, 23 sowie am Signaleingang der Anpassungseinrichtung 25 hinein- oder herausfließen. Diese Festlegung für die Frequenz des Taktsignals TS wird deshalb getroffen, damit es für die durch die übertragenen Signale generierten Spannungspegel auf der Empfängerseite für den Pfad 5 des Taktsignals TS sowie für die Signalpfade 6, 7, 8, 9 durch die genannten Zeitkonstanten nicht zu einer Beeinträchtigung kommen kann. Im Pfad 5 zur Übertragung des Taktsignals TS und in den Signalpfaden 6 und 7 werden die Zeitkonstanten im wesentlichen in Verbindung mit den Koppelkondensatoren 10, 11, 12 und den empfängerseitig angeordneten Widerständen 35, 36, 37 gebildet. In den Signalpfaden 8 und 9 ergeben sich die jeweiligen Zeitkonstanten aus der Kapazität der Koppelkondensatoren 13, 14 und der internen Eingangsbeschaltung der zugeordneten Logikeinheiten 21, 23.

Durch Signallaufzeittoleranzen zwischen den senderseitigen Logikeinheiten 16, 18, 20, 22 und den empfängerseitigen Logikeinheiten 17, 19, 21, 23 können Nadelimpulse im Nanosekunden- oder Subnanosekundenbereich auftreten. Wenn diese Nadelimpulse bei bestimmten Anwendungen nicht tolerierbar sind, können sie dadurch beseitigt werden, daß das Ausgangssignal der empfängerseitigen Logikeinheiten 17, 19, 21, 23 jeweils einem RC-Filter 31, 32, 33, 33 zugeführt wird, die in der Figur jeweils innerhalb einer punktierten Umrandung dargestellt sind.

## Patentansprüche

1. Schaltungsanordnung zur Signalkopplung zwischen Schaltungsteilen mit voneinander getrennten Versorgungsleitungen,
wobei
a) die Schaltungsanordnung aus einem ersten Schaltungsteil (1) und mindestens einem weiteren Schaltungsteil (2) besteht, wobei der erste Schaltungsteil (1) an einer ersten Versorgungsleitung (3) mit einem ersten Massepotential (GND1) angeschlossen ist und der oder die anderen Schaltungsteile (2) an eine von der ersten Versorgungsleitung (3) verschiedene Versorgungsleitung (4) mit einem zugehörigen zweiten Massepotential (GND2) angeschlossen sind, wobei mindestens in einem dieser weiteren Schaltungsteile (2) die Versorgungsleitung (4) oder die zugehörige Leitung für das Massepotential (GND2) zugeschaltet und abgeschaltet werden kann,
b) ein oder mehrere Signalpfade (6, 7, 8, 9) zwischen dem ersten Schaltungsteil (1) und dem oder den anderen Schaltungsteilen (2) bestehen, wobei in jedem dieser Signalpfade (6, 7, 8, 9) ein Koppelkondensator (11, 12, 13, 14) vorgesehen ist, um Nutzsignale (N1, N2, N3, N4) zwischen dem ersten und dem oder den anderen Schaltungsteilen kapazitiv zu übertragen,
c) in jedem Schaltungsteil (1, 2) beidseitig der Koppelkondensatoren (11, 12, 13, 14) Logikeinheiten (16, 17, 18, 19, 20, 21, 22, 23) vorgesehen sind, um die über die Signalpfade (6, 7, 8, 9) zu übertragenden Nutzsignale (N1, N2, N3, N4) zu senden und zu empfangen,
d) zumindest in einem der Schaltungsteile (1 oder 2) ein Taktgenerator (15) vorgesehen ist, der ein Taktsignal (TS) an die Logikeinheiten (16, 17, 18, 19, 20, 21, 22, 23) abgibt,
e) in den Logikeinheiten (16, 17, 18, 19, 20, 21, 22, 23) ein zu übertragendes Nutzsignal (N1, N2, N3, N4) sowohl senderseitig als auch empfängerseitig mit dem Taktsignal (TS) jeweils über eine EXKLUSIV ODER" - Funktion verknüpft wird,
**dadurch gekennzeichnet,**
**daß** der Taktgenerator (15) und die empfängerseitigen Logikeinheiten (17, 19, 21, 23) über eine Anpassungseinrichtung (24 bzw. 25) miteinander verbunden sind, um das den empfängerseitigen Logikeinheiten (17, 19, 21, 23) zugeführte Taktsignal (TS) in dem Maße zeitlich anzupassen, wie die über die Signalpfade (6, 7, 8, 9) übertragenen, aus dem Nutzsignal (N1, N2, N3, N4) und dem Taktsignal (TS) bestehenden Mischsignale (M1, M2, M3, M4) in den senderseitigen Logikeinheiten (16, 18, 20, 22) in ihrer Laufzeit verzögert werden,
und **daß**
in Verbindung mit dem Eingang der empfängerseitigen Logikeinheiten (17, 19, 21, 23) und dem Eingang der Anpassungseinrichtung (25) ein entweder dem jeweiligen Eingang vorgeschaltetes Diodennetzwerk (38, 39) oder ein in der betreffenden Logikeinheit bzw. in der Anpassungseinrichtung (25) integriertes Diodennetzwerk vorgesehen ist, welches sicherstellt, daß die Potentiale der über einen Koppelkondensator (11,12,13,14) übertragenen Mischsignale (M1, M2, M3, M4) oder das Potential des über den Koppelkondensator (10) übertragenen Taktsignals (TS) den Eingangsspannungsbereich, in weichem die empfängerseitigen Logikeinheiten (17, 19, 21, 23) oder die Anpassungseinrichtung (25) ein Signal auswerten können, nicht überschreiten oder unterschreiten.

2. Schaltungsanordnung nach Anspruch 1,
**dadurch gekennzeichnet,**
**daß**, wenn nur in einem der Schaltungsteile (1 oder 2) ein Taktgenerator (15) vorgesehen ist, das Taktsignal (TS) über einen eigenen Pfad (5) und einen darin befindlichen Koppelkondensator (10) von einem Schaltungsteil (2) zum anderen Schaltungsteil (1) übertragen wird.

3. Schaltungsanordnung nach einem der vorangegangenen Ansprüche,
**dadurch gekennzeichnet,**
**daß** sich das Taktsignal (TS) zumindest in seiner Phasenlage, Frequenz oder Pulsweite von den zu übertragenden Nutzsignalen (N1, N2, N3, N4) unterscheidet.

4. Schaltungsanordnung nach einem der vorangegangenen Ansprüche,
**dadurch gekennzeichnet,**
**daß** das Taktsignal (TS) als Rechtecksignal ausgebildet ist.

5. Schaltungsanordnung nach einem der vorangegangenen Ansprüche,
**dadurch gekennzeichnet,**
**daß** der Takt des Taktsignals (TS) von kürzerer Dauer ist als die Zeitkonstante für diejenigen Ströme, die über die Koppelkondensatoren (10, 11, 12, 13, 14) in die Signaleingänge der empfängerseitigen Logikeinheiten (17, 19, 21, 23) bzw. in den Signaleingang der Anpassungseinrichtung (25) hineinfließen oder aus diesen herausfließen.

6. Schaltungsanordnung nach einem der vorangegangenen Ansprüche,
**dadurch gekennzeichnet,**
**daß** in den Signalpfaden (6, 7, 8, 9) oder in dem Pfad (5) für das Taktsignal (TS) in Serie zu dem jeweiligen Koppelkondensator (10, 11, 12, 13, 14) ein Strom begrenzender Widerstand (26, 27, 28, 29, 30) oder ein weiterer Kondensator (40) oder beides angeordnet ist.

7. Schaltungsanordnung nach einem der vorangegangenen Ansprüche,
**dadurch gekennzeichnet,**
**daß** das Ausgangssignal einer empfängerseitigen Logikeinheit (17, 19, 21, 23) einem RC-Filter (31, 32, 33, 34) zugeführt wird.

8. Schaltungsanordnung nach einem der vorangegangenen Ansprüche,
**dadurch gekennzeichnet,**
**daß** in demjenigen Schaltungsteil (1), der dauerhaft stromversorgt ist, bei den empfängerseitigen Logikeinheiten (17, 19) und der gegebenenfalls dort vorgesehenen Anpassungseinrichtung (25) jeweils ein Widerstand (35, 36, 37) oder ein Schmitt-Trigger vorgesehen ist, der den Spannungspegel an demjenigen Eingang der Logikeinheit (17, 19) bzw. der Anpassungseinrichtung (25) fixiert, der mit dem Koppelkondensator (10, 11, 12) verbunden ist.

## Claims

1. Circuit arrangement for signal coupling between circuit parts having supply lines isolated from one another,
where
a) the circuit arrangement comprises a first circuit part (1) and at least one further circuit part (2), the first circuit part (1) being connected to a first supply line (3) having a first earth potential (GND1), and the other circuit part(s) (2) being connected to a supply line (4) which is different from the first supply line (3) and has an associated second earth potential (GND2), the supply line (4) or the associated line for the earth potential (GND2) being able to be connected and disconnected at least in one of these further circuit parts (2),
b) there are one or more signal paths (6, 7, 8, 9) between the first circuit part (1) and the other circuit part(s) (2), each of these signal paths (6, 7, 8, 9) containing a coupling capacitor (11, 12, 13, 14) for capacitively transmitting useful signals (N1, N2, N3, N4) between the first circuit part and the other circuit part(s),
c) each circuit part (1, 2) contains, on both sides of the coupling capacitors (11, 12, 13, 14), logic units (16, 17, 18, 19, 20, 21, 22, 23) for transmitting and receiving the useful signals (N1, N2, N3, N4) which are to be transmitted via the signal paths (6, 7, 8, 9),
d) at least one of the circuit parts (1 or 2) contains a clock generator (15) which outputs a clock signal (TS) to the logic units (16, 17, 18, 19, 20, 21, 22, 23),
e) a useful signal (N1, N2, N3, N4) to be transmitted is logically combined with the clock signal (TS) in the logic units (16, 17, 18, 19, 20, 21, 22, 23) both at the transmitter end and at the receiver end using an EXCLUSIVE OR function in each case,
**characterized by the fact that**
the clock generator (15) and the receiver-end logic units (17, 19, 21, 23) are connected to one another by means of a matching device (24 and 25, respectively) in order to match the timing of the clock signal (TS) supplied to the receiver-end logic units (17, 19, 21, 23) to the extent by which the mixed signals (M1, M2, M3, M4) which comprise the useful signal (N1, N2, N3, N4) and the clock signal (TS) and are transmitted via the signal paths (6, 7, 8, 9) are delayed in the transmitter-end logic units (16, 18, 20, 22),
and that connected to the input of the receiver-end logic units (17, 19, 21, 23) and to the input of the matching device (25), there is either a diode network (38, 39) connected upstream of the respective input or a diode network which is integrated in the relevant logic unit and in the matching device (25), said diode network ensuring that the potentials of the mixed signals (M1, M2, M3, M4) transmitted via a coupling capacitor (11, 12, 13, 14) or the potential of the clock signal (TS) transmitted via the coupling capacitor (10) do not exceed or fall below the input voltage range in which the receiver-end logic units (17, 19, 21, 23) or the matching device (25) are able to evaluate a signal.

2. Circuit arrangement according to Claim 1,
**characterized by the fact that,**
if only one of the circuit parts (1 or 2) contains a clock generator (15), the clock signal (TS) is transmitted from one circuit part (2) to the other circuit part (1) via a dedicated path (5) and a coupling capacitor (10) situated therein.

3. Circuit arrangement according to one of the preceding claims,
**characterized by the fact that**
at least the phase angle, frequency or pulse width of the clock signal (TS) is different from that of the useful signals (N1, N2, N3, N4) to be transmitted.

4. Circuit arrangement according to one of the preceding claims,
**characterized by the fact that**
the clock signal (TS) is in the form of a square wave signal.

5. Circuit arrangement according to one of the preceding claims,
**characterized by the fact that**
the clock cycle of the clock signal (TS) is shorter in duration than the time constant for those currents flowing via the coupling capacitors (10, 11, 12, 13, 14) into the signal inputs of the receiver-end logic units (17, 19, 21, 23) and into the signal input of the matching device (25), or flowing out of these.

6. Circuit arrangement according to one of the preceding claims,
**characterized by the fact that**
the signal paths (6, 7, 8, 9) or the path (5) for the clock signal (TS) contain(s) a current-limiting resistor (26, 27, 28, 29, 30) or a further capacitor (40) or both in series with the respective coupling capacitor (10, 11, 12, 13, 14).

7. Circuit arrangement according to one of the preceding claims,
**characterized by the fact that**
the output signal from a receiver-end logic unit (17, 19, 21, 23) is supplied to an RC filter (31, 32, 33, 34).

8. Circuit arrangement according to one of the preceding claims,
**characterized by the fact that**
that circuit part (1) which is continuously supplied with current contains, for the receiver-end logic units (17, 19) and the matching device (25), which is possibly provided there, a respective resistor (35, 36, 37) or a Schmitt trigger which fixes the voltage level at that input of the logic unit (17, 19) and of the matching device (25) which is connected to the coupling capacitor (10, 11, 12).

## Revendications

1. Circuit destiné à coupler des signaux entre des parties de circuit ayant des conducteurs d'alimentation séparés les uns des autres,
a) où le circuit est composé d'une première partie de circuit (1) et de, au moins, une autre partie de circuit (2), la première partie de circuit (1 ) étant raccordée à un premier conducteur d'alimentation (3) avec un premier potentiel de masse (GND1) et la ou les autres parties de circuit (2) étant raccordées à un conducteur d'alimentation (4) différent du premier conducteur d'alimentation (3) et ayant un deuxième potentiel de masse (GND2) correspondant, où, dans au moins l'une de ces autres parties de circuit (2), le conducteur d'alimentation (4) ou le conducteur correspondant pour le potentiel de masse (GND2) peut être branché ou débranché,
b) où il existe un ou plusieurs cheminements de signaux (6, 7, 8, 9) entre la première partie de circuit (1) et la ou les autres parties de circuit (2), un condensateur de couplage (11, 12, 13, 14) étant prévu dans chacun de ces cheminements de signaux (6, 7, 8, 9) pour transmettre d'une façon capacitive des signaux utiles (N1, N2, N3, N4) entre la première partie de circuit et la ou les autres parties de circuit,
c) où il est prévu des unités logiques (16, 17, 18, 19, 20, 21, 22, 23) dans chaque partie de circuit (1, 2) des deux côtés des condensateurs de couplage (11, 12, 13, 14) pour émettre et pour recevoir les signaux utiles (N1, N2, N3, N4) à transmettre par l'intermédiaire des cheminements de signaux (6, 7, 8, 9),
d) où il est prévu un générateur de cadence d'horloge (15) dans au moins l'une des parties de circuit (1 ou 2) pour délivrer un signal d'horloge (TS) aux unités logiques (16, 17, 18, 19, 20, 21, 22, 23),
e) où un signal utile (N1, N2, N3, N4) à transmettre est combiné, dans les unités logiques (16, 17, 18, 19, 20, 21, 22, 23), non seulement du côté émission, mais aussi du côté réception, au signal de cadence d'horloge (TS), dans chaque cas par l'intermédiaire d'une fonction "OU EXCLUSIF",
**caractérisé par le fait**
**que** le générateur de cadence d'horloge (15) et les unités logiques côté réception (17, 19, 21, 23) sont reliés les uns aux autres à travers un dispositif d'adaptation (24 et, respectivement, 25) pour adapter dans le temps le signal de cadence d'horloge (TS) appliqué aux unités logiques côté réception (17, 19, 21, 23) dans la mesure où les signaux mixtes (M1, M2, M3, M4), transmis par l'intermédiaire des cheminements de signaux (6, 7, 8, 9) et composés par le signal utile (N1, N2, N3, N4) et le signal de cadence d'horloge (TS), sont retardés dans leur temps de propagation dans les unités logiques côté émission (16, 18, 20, 22)
et **qu'**il est prévu, en liaison avec l'entrée des unités logiques côté réception (17, 19, 21, 23) et l'entrée du dispositif d'adaptation (25), ou bien un réseau de diodes (38, 39) monté en aval de l'entrée respective ou bien un réseau de diodes intégré dans l'unité logique correspondante ou, respectivement, dans le dispositif d'adaptation (25), qui assure que les potentiels des signaux mixtes (M1, M2, M3, M4) transmis par l'intermédiaire d'un condensateur de couplage (11, 12, 13, 14) ou le potentiel du signal de cadence d'horloge (TS) transmis par l'intermédiaire du condensateur de couplage (10) ne sortent pas, ni vers haut, ni vers le bas, de la plage de tension d'entrée dans laquelle les unités logiques côté réception (17, 19, 21, 23) ou le dispositif d'adaptation (25) peuvent analyser un signal.

2. Circuit selon la revendication 1
**caractérisé par le fait**
**que**, si un générateur de cadence d'horloge (15) est prévu seulement dans l'une des parties de circuit (1 ou 2), le signal de cadence d'horloge (TS) est transmis, par l'intermédiaire d'un cheminement (5), qui lui est propre, et d'un condensateur de couplage (10) qui s'y trouve, de l'une des parties de circuit (2) vers l'autre partie de circuit (1).

3. Circuit selon l'une des revendications précédentes
**caractérisé par le fait**
**que** le signal de cadence d'horloge (TS) diffère des signaux utiles à transmettre (N1, N2, N3, N4) au moins par sa position de phase, sa fréquence ou sa largeur d'impulsions.

4. Circuit selon l'une des revendications précédentes
**caractérisé par le fait**
**que** le signal de cadence d'horloge (TS) est conçu comme signal rectangulaire.

5. Circuit selon l'une des revendications précédentes
**caractérisé par le fait**
**que** la cadence du signal de cadence d'horloge (TS) est plus courte que la constante de temps des courants qui entrent, par l'intermédiaire des condensateurs de couplage (10, 11, 12, 13, 14), dans les entrées de signaux des unités logiques côté réception (17, 19, 21, 23) et, respectivement, dans l'entrée de signal du dispositif d'adaptation (25) ou en sortent.

6. Circuit selon l'une des revendications précédentes
**caractérisé par le fait**
**que**, dans les cheminements de signaux (6, 7, 8, 9) ou dans le cheminement (5) pour le signal de cadence d'horloge (TS), une résistance de limitation du courant (26, 27, 28, 29, 30) ou un autre condensateur (40) ou les deux sont montés en série sur le condensateur de couplage respectif (10, 11, 12, 13, 14).

7. Circuit selon l'une des revendications précédentes
**caractérisé par le fait**
**que** le signal de sortie d'une unité logique côté réception (17, 19, 21, 23) est appliqué à un filtre RC (31, 32, 33, 34).

8. Circuit selon l'une des revendications précédentes
**caractérisé par le fait**
**que**, dans la partie de circuit (1), qui est alimentée en courant en permanence, il est prévu, au niveau de chaque unité logique côté réception (17, 19) et, le cas échéant, du dispositif d'adaptation (25), qui y est prévu, une résistance (35, 36, 37) ou un déclencheur de Schmitt qui fixe le niveau de tension à l'entrée de l'unité logique (17, 19) et, respectivement, du dispositif d'adaptation (25), qui correspond au condensateur de couplage (10, 11, 12).
